# EUROPEAN PATENT SPECIFICATION

(11) **EP 1 062 105 B1**
(45) Date of publication and mention of the grant of the patent: **28.12.2005**
(21) Application number: 00911558.5
(22) Date of filing: 06.01.2000
(51) Int. Cl.: B60C 1/00, C08K 5/09, C08L 21/00

(54) **TIRE COMPONENTS HAVING IMPROVED TEAR STRENGTH**
REIFENKOMPONENTEN MIT EINER VERBESSERTEN REISSFESTIGKEIT
COMPOSANTS POUR PNEUS AYANT UNE PLUS HAUTE RESISTANCE AU DECHIREMENT

(30) Priority: 08.01.1999 US 227927; 08.01.1999 US 227121
(43) Date of publication of application: 27.12.2000
(73) Proprietor: Bridgestone Corporation, Tokyo 104 (JP)
(72) Inventor: LIN, Chen-Chy, Hudson, OH 44236 (US); HAMADA, Tatsuro, Copley, OH 44321 (US)
(74) Representative: Albrecht, Thomas
(86) International application number: PCT/US2000/000289
(87) International publication number: WO 2000/040652

(56) References cited:
- EP-A- 0 445 486
- EP-A- 0 867 471
- GB-A- 1 092 174
- US-A- 4 739 005

## Description

### Field of the Invention

This invention relates to improved rubber compositions. More particularly, this invention is directed toward rubber vulcanizates that demonstrate improved tear strength. Specifically, the rubber compositions and vulcanizates of this invention include at least one polyolefin as an additive to achieve the desired properties. The preferred embodiments of this invention are directed toward vulcanizable compositions of matter that are useful for fabricating tires.

### Background of the Invention

Off road or heavy truck tires are often subjected to rough road conditions that produce repetitive, localized high pressure pounding on the tire. These stresses can cause fatigue fracture and can lead to crack formation and growth. This degradation of the tire has also been referred to as chipping or chunking of the tread surface or base material.

In an attempt to prevent this degradation, it is known to add reinforcements such as carbon black, silicas, silica/silanes or short fibers to tire compositions. Silica has been found advantageous due to its ability to deflect and suppress cut prolongation, while silanes have been added to bind the silica to unsaturated elastomers. The fibers that have been added include nylon and aramid fibers.

It is also known that the addition of polyolefins to rubber compositions can provide several beneficial properties. For example, low molecular weight, high density polyethylene, and high molecular weight, low density polyethylene, are known to improve the tear strength of polybutadiene or natural rubber vulcanizates. In the tire art, it has also been found that polyethylene increases the green tear strength of carcass compounds and permits easy extrusion in calendering without scorch. Polypropylene likewise increases the green strength of butyl rubber. Polypropylene has also been effective in raising the static and dynamic modulus of rubber, as well as its tear strength.

Although the addition of polyolefins to rubber compositions is known to provide several beneficial effects, the addition of polyolefin to tire recipes has, heretofore, had a deleterious affect on the mechanical and wear properties of tires, as well as handling and ride comfortability of the tires.

Accordingly, there remains a need in the art to improve the tear strength of rubber vulcanizates, especially those deriving from tire compositions, without sacrificing the other properties of vulcanizates, tire components, or tires.

US patent No. 4,739,005 describes a rubber composition having improved resistance to crack growth and cut resistance which comprises 1 - 15 parts by weight of a resin composed mainly of propylene-ethylene block copolymer based on 100 parts by weight of rubber ingredient, and particular amount of carbon black having specified iodine absorption value and DBP oil absorption.

European patent application No. 0 445 486 describes a process for improving the modulus of a rubber without sacrificing other properties. By utilizing this process, rubber compositions having increased modulus are prepared by the formation of polypropylene fibrils randomly dispersed throughout the rubber matrix. The process includes (1) forming a blend of (a) a polymer alloy containing polypropylene and (b) an unvulcanized rubber stock wherein said polypropylene is present in said blend in an amount ranging from about 5 phr to about 25 phr; and (2) vulcanizing the rubber stock in said blend after orienting said polypropylene by the application of heat and flowing said blend within a mold cavity.

European patent application No. EP 0 867 471 describes a resin-reinforced elastomer which comprises as principal components, a rubber and a polyolefin having an average particle diameter of at most 1 µm, and in which the rubber and the polyolefin are linked together; a process for producing the resin-reinforced elastomer by melt kneading a polyolefin, a No. 1 rubber and a binding agent to prepare a thermoplastic composition, adding a No. 2 rubber to the resultant thermoplastic composition and melt kneading the mixture thus formed to disperse the polyolefin in the rubber components; and a pneumatic tire using the resin-reinforced elastomer in its tread. The resin-reinforced elastomer has a uniform modulus and a low density, is minimized in directionality, and is excellent in tensile strength, fatigue resistance and abrasion resistance.

British patent No. 1 092 174 describes a rubber vulcanizate which is produced by incorporating maleic acid, fumaric acid, or maleic anhydride in a rubber mixture containing silicic acid, calcium silicate, and/or aluminium silicate as a filler, and vulcanizing the mixture.

### Summary of the Invention

The present invention provides a tire component having increased tear strength, where the tire component is less susceptible to chipping and chunking, without substantially impacting the mechanical and wear properties of the tire component or its hysteresis properties.

The present invention also provides a vulcanizate having increased tear strength, where the vulcanizate is less susceptible to chipping and chunking, without substantially impacting the mechanical and wear properties of the vulcanizate or its hysteresis properties.

The present invention also provides vulcanizable compositions of matter that will give rise to a cured product having increased tear strength; where the cured product is less susceptible to chipping and chunking, without substantially impacting the mechanical and wear properties of the cured product or affecting the hysteresis properties of the cured product.

The present invention also provides a tire having increased tear strength without substantially impacting the mechanical and wear properties of the tire at high temperatures.

The present invention also provides a vulcanizate having increased tear strength without substantially impacting the mechanical and wear properties of the vulcanizate after heat aging.

One aspect of the present invention is a tire having improved tear strength including at least one component comprising a vulcanized elastomer and a tear strength additive prepared by contacting from about 5 to about 50 parts by weight polypropylene homopolymer and from about 0.05 to about 2.0 parts by weight of an anhydride compatibilizing agent.

Another aspect of the present invention is a vulcanizable composition of matter comprising an elastomer and a tear strength additive prepared by contacting from about 5 to about 50 parts by weight polypropylene homopolymer and from about 0.05 to about 2.0 parts by weight of an anhydride compatibilizing agent.

The present invention further provides a vulcanizate prepared by a process comprising the steps of preparing a vulcanizable composition of matter described above; and vulcanizing the composition of matter with at least one vulcanizing agent.

### Embodiments of the Invention

### Product Embodiments

It has now been found that the tear strength of rubber vulcanizates can be improved without a corresponding deleterious decrease in the other mechanical properties of the vulcanizates. This result is achieved by the addition of polypropylene homopolymer and an anhydride compatibilizing agent to a vulcanizable composition of matter. Accordingly, the present invention is directed toward rubber compositions that include polypropylene homopolymer and an anhydride compatibilizing agent, as well as vulcanizates prepared from these compositions. The preferred embodiments of this invention are directed toward rubber compositions that are useful for fabricating tire components, as well as rubber vulcanizates that are useful as tire.

The practice of the present invention is especially useful in base stock recipes, but inasmuch as the increase in tear strength does not deleteriously impact the wear, mechanical, and hysteresis properties of the rubber, the practice of the present invention may also be applied to the tread and side wall stocks of tires. Furthermore, it should be understood that the practice of the present invention is believed to be especially advantageous for off-road or heavy-duty truck tires, although it is believed that the practice of the present invention will improve other tires such as passenger tires.

It has also been found that the addition of polyolefin copolymers to vulcanizable compositions of matter that are useful for making tires provides for tires and tire components having increased tear strength without substantially affecting the mechanical, wear and hysteresis properties of the tire rubber. Notably, the mechanical properties of the tire components are not substantially degraded after heat aging by the addition of the polyolefin polymers.

### Polypropylene and Anhydride Compatibilizing Agent

In general, the improved vulcanizates of this invention are prepared from rubber compositions that include at least one rubber, at least one type of polypropylene homopolymer, and an anhydride compatibilizing agent. In general, the composition should include up to about 50 parts by weight polypropylene per one hundred parts by weight rubber and at least about 0.05 parts by weight anhydride compatibilizing agent per one hundred parts by weight rubber. More specifically, the rubber compositions include from about 5 to about 50 parts by weight polypropylene, per one hundred parts by weight rubber (phr) and from about 0.05 to about 2.0 parts by weight of an anhydride compatibilizing agent phr. Preferably, the rubber compositions include at least one rubber, from about 10 to about 35 parts by weight polypropylene phr, and from about 0.2 to about 1.0 parts by weight of an anhydride compatibilizing agent phr. Even more preferably, the rubber compositions include at least one rubber, from about 15 to about 25 parts by weight polypropylene phr, and from about 0.4 to about 0.8 parts by weight of an anhydride compatibilizing agent phr. It should be understood that the compositions of this invention can include more than one type of any one specific component. In other words, the compositions of this invention can include mixtures of various types of polypropylene homopolymers, mixtures of various types of anhydride compatibilizing agents, and mixtures of various types of elastomers. Distinctions between the various elastomers, anhydride compatibilizing agents and polypropylenes are set forth below.

The polypropylene that is useful in practicing this invention includes any commercially available polypropylene homopolymer, and therefore practice of this invention should not be limited to the use or selection of any one particular polypropylene. As those skilled in the art will appreciate, most polypropylene homopolymers have an isotactic microstructure and their purity is related to the catalyst employed to synthesize the polymers. Therefore, polypropylene having an isotactic microstructure is most preferred. Without wishing to limit the scope of the polypropylene homopolymers that can be used in this invention, it is preferred to use polypropylene homopolymers that have been produced from fairly specific catalyst systems such as metallocene catalysts. One specific type of polypropylene homopolymer that can be employed in the practice of this invention includes that polypropylene that is available from Aristech Chemical Corporation of Pittsburgh, Pennsylvania under the tradename FP300F. Numerous other polypropylene homopolymers can be obtained from a variety of other companies as well.

Preferred polypropylenes include those that are commercially available and that have a weight average molecular weight (Mw) of from about 80,000 to about 500,000, more preferably from about 90,000 to about 400,000, and even more preferably from about 100,000 to about 350,00. For purposes of this specification, weight average molecular weight will refer to that molecular weight determined by GPC analysis methods by using polystyrene as a standard. It is also highly preferred to employ polypropylene homopolymers that have a molecular weight distribution (Mw/Mn) of less than about 4.5, preferably less than about 4.0, and even more preferably less than about 3.8.

The anhydride compatibilizing agent that is useful in practicing this invention includes any of the numerous anhydride compounds that are known in art. Typically, these compounds are based upon cyclic structures that give rise to diacids upon ring opening reactions. Some known anhydrides include maleic anhydride, succinic anhydride, phthalic anhydride, cyclohexane dicarboxylic anhydride, itaconic anhydride, citraconic anhydride, and the like, as well as the numerous alkyl and alkenyl derivatives of these compounds. The preferred compatibilizing agents for this invention include maleic anhydride and phthalic anhydride, with maleic anhydride being the most preferred.

Many of the anhydride compatibilizing agents that can be used in the practice of this invention are commercially available from a number of sources including Aldrich Chemical of Milwaukee, Wisconsin. Also, there are numerous synthetic techniques known and published in the art for making anhydride compounds and therefore the scope of the present invention should not be limited by the commercial availability of any particular anhydride compound. Practice of this invention is not limited to any one particular vulcanizable composition of matter or tire compounding stock.

### Processing of the Embodiments

Typically, these vulcanizable compositions of matter include a rubber component that is blended with reinforcing fillers and at least one vulcanizing agent. These compositions typically also include other compounding additives. These additives include, without limitation, accelerators, oils, waxes, scorch inhibiting agents, and processing aids. As known in the art, vulcanizable compositions of matter containing synthetic rubbers typically include antidegradants, processing oils, zinc oxide, optional tackifying resins, optional reinforcing resins, optional fatty acids, optional peptizers, and optional scorch inhibiting agents.

These vulcanizable compositions are compounded or blended by using mixing equipment and procedures conventually employed in the art. Preferably, an initial masterbatch is prepared that includes the rubber component and the reinforcing fillers, as well as other optional additives such as processing oil and antioxidants. According to this invention, it is preferred to add the combination of the polypropylene and anhydride compatibilizing agents during preparation of the initial masterbatch. Once this initial masterbatch is prepared, the vulcanizing agents are blended into the composition. This vulcanizable composition of matter can then be processed according to ordinary tire manufacturing techniques. Likewise, the tires are ultimately fabricated by using standard rubber curing techniques. For further explanation of rubber compounding and the additives conventionally employed, one can refer to *The Compounding and Vulcanization of Rubber,* by Stevens in Rubber Technology Second Edition (1973 Van Nostrand Reihold Company), which is incorporated herein by reference.

The elastomers that are typically employed within vulcanizable compositions of matter that are useful for making tires include both natural and synthetic elastomers rubbers. For example, these elastomers include, without limitation, natural rubber, synthetic polyisoprene rubber, styrene/butadiene rubber (SBR), polybutadiene, butyl rubber, neoprene, ethylene/propylene rubber, ethylene/propylene/diene rubber (EPDM), acrylonitrile/butadiene rubber (NBR), silicone rubber, the fluoroelastomer, ethylene acrylic rubber, ethylene vinyl acetate copolymers (EVA) epichlorohydrin rubbers, chlorinated polyethylene rubber, chlorosulfonated polyethylene rubbers, hydrogenated nitrile rubber, tetrafluoroethylene/propylene rubber and the like. As used herein, the term elastomer or rubber will refer to a blend of synthetic and natural rubber, a blend of various synthetic rubbers, or simply one type of elastomer or rubber. Also, the elastomers that are useful in practicing this invention include any of the various functionalized elastomers that are conventionally employed in the art of making tires. Inasmuch as the preferred embodiments of the present invention are directed toward off-road and heavy truck tires, it is preferred to employ natural rubber within subtread compounds and SBR or SBR/natural rubber blends in tread compounds.

The reinforcing agents, such as carbon black or silica, typically are employed in amounts ranging from about 1 to about 100 parts by weight per 100 parts by weight rubber (phr), with about 20 to about 80 parts by weight (phr) being preferred, and with about 40 to about 80 parts by weight (phr) being most preferred. The carbon blacks may include any of the commonly available, commercially-produced carbon blacks, but those having a surface area (EMSA) of at least 20 m²/g and more preferably at least 35 m²/g up to 200 m²/g or higher are preferred. Surface area values used in this application are those determined by ASTM test D-1765 using the cetyltrimethyl-ammonium bromide (CTAB) technique. Among the useful carbon blacks are furnace black, channel blacks and lamp blacks. More specifically, examples of the carbon blacks include super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks and conducting channel blacks. Other carbon blacks that may be utilized include acetylene blacks. Mixtures of two or more of the above blacks can be used in preparing the carbon black products of the invention. Typical values for surface areas of usable carbon blacks are summarized in the following table.

| **Carbon Blacks** | |
|---|---|
| ASTM Designation (D-1765-82a) | Surface Area (m²/g) (D-3765) |
| N-110 | 126 |
| N-220 | 111 |
| N-339 | 95 |
| N-330 | 83 |
| N-550 | 42 |
| N-660 | 35 |

The carbon blacks utilized in the preparation of the rubber compounds used may be in pelletized form or in unpelletized flocculent mass. Preferably, for more uniform mixing, unpelletized carbon black is preferred.

With respect to the silica fillers, the vulcanizable compositions of the present invention may preferably be reinforced with amorphous silica (silicon dioxide). Silicas are generally referred to as wet-process, hydrated silicas because they are produced by a chemical reaction in water, from which they are precipitated as ultra-fine, spherical particles. These particles strongly associate into aggregates that in turn combine less strongly into agglomerates. The surface area, as measured by the BET method, gives the best measure of the reinforcing character of different silicas. Useful silicas preferably have a surface area of about 32 to about 400 m²/g, with the range of about 100 to about 250 m²/g being preferred, and the range of about 150 to about 220 m²/g being most preferred. The pH of the silica filler is generally about 5.5 to about 7 or slightly over, preferably about 5.5 to about 6.8.

When employed, silica can be used in the amount of about 1 part to about 100 parts by weight per 100 parts of polymer (phr), preferably in an amount from about 5 to about 80 phr. The useful upper range is limited by the high viscosity imparted by fillers of this type. Usually, both carbon black and silica are employed in combination as the reinforcing filler. When both are used, they can be used in a carbon black:silica ratio of from about 10:1 to about 1:2. Some of the commercially available silicas that may be used include: Hi-Sil® 215, Hi-Sil® 233, and Hi-Sil® 190, produced by PPG Industries. Also, a number of useful commercial grades of different silicas are available from a number of sources including Rhone Poulenc. Typically, a coupling agent is added when silica is used as a reinforcing filler. One coupling agent that is conventionally used is bis-[3(triethoxysilyl) propyl]-tetrasulfide, which is commercially available from Degussa, Inc. of New York, New York under the tradename SI69.

The reinforced rubber compounds can be cured in a conventional manner with known vulcanizing agents at about 0.5 to about 4 phr. For example, sulfur or peroxide-based curing systems may be employed. For a general disclosure of suitable vulcanizing agents one can refer to Kirk-Othmer, Encyclopedia of Chemical Technology, 3^{rd} Edition, Wiley Interscience, N.Y. 1982, Vol. 20, pp. 365-468, particularly Vulcanization Agents and Auxiliary Materials pp. 390-402, or Vulcanization by A.Y. Coran , Encyclopedia of Polymer Science and Engineering, 2^{nd} Edition, John Wiley & Sons, Inc., 1989; both of which are incorporated herein by reference. Vulcanizing agents may be used alone or in combination. This invention does not affect cure times, and thus the polymers can be cured for a conventional amount of time. Cured or crosslinked polymers will be referred to as vulcanizates for purposes of this disclosure.

In addition to the advantageous feature of the present invention noted above, the cost of producing tires, especially off-road tires, can be significantly reduced by employing the formulations according to the present invention. Because polyolefin copolymers or polypropylene and anhydride additives are added to tire formulations or recipes without deleteriously impacting the ultimate properties of the tires, the use of these additives yields significant cost savings.

In order to demonstrate the practice of the present invention, the following examples have been prepared and tested as described in the Experimental Section disclosed hereinbelow. The examples should not, however, be viewed as limiting the scope of the invention. The claims will serve to define the invention.

### Examples

Thirteen rubber stocks were prepared according to the recipes set forth in Tables I-A and I-B, the former for the Polypropylene/Anhydride embodiment of the invention and the latter for a Polyolefin copolymer embodiment described for comparison.

| TABLE I-A | | |
|---|---|---|
| Ingredient | Parts by Weight | Parts by Weight |
| Natural Rubber | 100 | |
| Carbon Black (SAF) | 45 | |
| Zinc Oxide | 3.5 | |
| Retardeor | 0.1 | |
| Antioxidants | 2.3 | |
| Additives (not in controls) | | |
| Isotactic polypropylene | 0-20 | |
| Maleic Anhydride | 0-0.6 | |
| Masterbatch | | 148.9 -169.5 |
| | | |
| Sulfur | 1.3 | |
| Accelerator | 1.25 | |
| Hardened Fatty Acid | 2 | |
| Total | | 152.75-174.05 |

| TABLE I-B | | |
|---|---|---|
| Ingredient | Parts by Weight | Parts by Weight |
| Natural Rubber | 100 | |
| Carbon Black (SAF) | 45 | |
| Zinc Oxide | 3.5 | |
| Retardor | 0.1 | |
| Antioxidants | 2.3 | |
| Masterbatch | | 150.6 |
| | | |
| Sulfur | 1.3 | |
| Accelerator | 1.25 | |
| Hardened Fatty Acid | 2 | |
| Total | | 155.15 |
| Polyolefin Additive (not in controls) | 20 | |
| Total | | 175.15 |

In Table 1-A, the isotactic polypropylene had a weight average molecular weight, as determined by GPC Analysis, of about 250,000, and a melt index of 12 g/10 min (230°C/2.16 Kg, ASTM-D 1238), and was obtained from Aldrich Chemical Company of Milwaukee, Wisconsin. The maleic anhydride was obtained from Aldrich Chemical Company of Milwaukee, Wisconsin. The other ingredients are conventionally used in the art and are commercially available from a number of sources.

Except for the polyolefin additive, each of the ingredients used in the recipe of Table I-B are conventionally used in the art and are commercially available from a number of sources.

For purposes of each stock prepared in this experiment, the same ingredients were used for each of the stocks prepared except for the variation in additive not in the controls, as will be described hereinbelow.

By employing standard compounding techniques, a masterbatch was prepared by mixing the natural rubber; the additive packages (where applicable: e.g., polyolefin copolymer additive or isotactic polypropylene and maleic anhydride); carbon black; antioxidants; zinc oxide, and retardor, and antioxidants. Specifically, these ingredients were mixed within an internal mixer for about five minutes at about 50 r.p.m. The initial temperature was about 110°C, and the drop temperature that was achieved was about 180°C. The masterbatch was allowed to cool, and the hardened fatty acid, sulfur, and accelerator were added to the masterbatch. Mixing was continued for about 30 seconds at about 50 rpmr.p.m. The final drop temperature that was achieved was about 110°C.

As noted above, the additives were added to certain stocks to differentiate from the controls. Specifically, Stocks 1, 2, from Table 1-A and Stocks 6, 7, 10, and 11 were controls while Stocks 3, 4, 5, 8, 9, 12, and 13 included additive. For the controls, Stocks 1 and 2 did not include any polyolefin copolymer. Stocks 7 and 11 included only a polypropylene homopolymer additive, and Stocks 8 and 10 did not include any polyolefin additive.

The vulcanizable compositions of matter of Stocks 1-5 were then sheeted and molded at about 145°C for about 33 minutes. The tensile mechanical properties were measured by using the procedure described in ASTM-D 412 at 100°C. The tensile test specimens were round rings with a dimension of 0.13 cm (0.05 inches) in width and 0.19 cm (0.075 inches) in thickness. A specific gauge length of 2.5 cm (1.0 inch) was used for the tensile tests. Also, the tear strengths of the vulcanized stocks were measured by using the procedure set forth in ASTM-D 624 at 100°C. The test specimens employed were nicked round rings with a dimension of 0.64 cm (0.25 inches) in width 0.25 cm (0.10 inches) in thickness, and 44 mm and 57.5 mm in inside and outside diameters, respectively. These specimens were tested at a specific gauge length of 4.445 cm (1.750 inches).

**TABLE II-A**

| Stock | 1 | 2 | 3 | 4 | 5 |
|---|---|---|---|---|---|
| Additive | | | | | |
| Polypropylene | 0 | 20 | 20 | 20 | 20 |
| pbw/phr | | | | | |
| Maleic Anhydride | 0 | 0 | 0.08 | 0.2 | 0.6 |
| pbw/phr | | | | | |

| Properties * | | | | | |
|---|---|---|---|---|---|
| Tensile Strength at Break @ 100°C (psi) | 3035 | 1886 | 2469 | 2160 | 2377 |
| Tensile Toughness @ 100°C | 8366 | 4690 | 6987 | 5482 | 6738 |
| Maximum Elongation @ 100°C (%) | 691 | 462 | 553 | 484 | 555 |
| 50% Modulus @ 100°C (psi) | 124 | 251 | 263 | 263 | 250 |
| 300% Modulus @ 100°C (psi) | 844 | 1289 | 1367 | 1394 | 1310 |
| Tear Strength @ 100°C (lb/in) | 490 | 555 | 506 | 602 | 620 |
| Travel at Tear (%) | 589 | 419 | 400 | 448 | 513 |

| | | | | | |
|---|---|---|---|---|---|
| * To convert from psi to kPa, multiply by 6.896. To convert from lb/in to kg/cm, multiply by 0.1786. | | | | | |

Based on the foregoing data, it should be evident that the addition of polypropylene, such as in Stock 2, increases the tear strength of the vulcanized stock. Many of the mechanical properties of Stock 2, however, greatly degraded as compared to the Stock I, which did not include any polypropylene. The addition of maleic anhydride slightly improved some of the properties degraded by the addition of polypropylene as represented by Stocks 3, 4, and 5.

The tensile mechanical properties of each Stock 1-5 was also determined after heat aging at 100°C for 24 hours. Table II-B includes the data obtained after this aging.

**TABLE III**

| Stock | 1 | 2 | 3 | 4 | 5 |
|---|---|---|---|---|---|
| Properties * | | | | | |
| Tensile Strength at Break @100°C(psi) | 2396 | 2136 | 2057 | 1916 | 2325 |
| Tensile Toughness @ 100°C | 5539 | 4539 | 4633 | 3907 | 5753 |
| Maximum Elongation @ 100°C (%) | 541 | 394 | 416 | 377 | 465 |
| 50% Modulus @ 100°C (psi) | 139 | 309 | 286 | 278 | 274 |
| 300% Modulus @ 100°C (psi) | 1062 | 1710 | 1554 | 1582 | 1601 |

| | | | | | |
|---|---|---|---|---|---|
| * To convert from psi to kPa, multiply by 6.896. | | | | | |

Based upon the data gathered after heat aging, it should be clear that the addition of maleic anhydride reduces the deleterious impact that polypropylene has on the tear and tensile mechanical properties of the vulcanized stocks.

Table IV-A more specifically sets forth the additives that were employed in each stock identified in Table 1-B above, along with the molecular weight (Mw), melt index, and ethylene content of each additive.

**TABLE IV-A**

| Stock | Type | Molecular Weight (M_{w}) | Melt Index | Ethylene Content (%) |
|---|---|---|---|---|
| 6 | none | --- | --- | --- |
| 7 | homopolymer | 250,000 | 12 | --- |
| 8 | copolymer | 120,000 | 12 | 16 |
| 9 | copolymer | 133,000 | 12 | 6 |
| 10 | None | --- | --- | --- |
| 11 | homopolymer | 106,000 | 33 | --- |
| 12 | copolymer | 119,000 | 35 | 12 |
| 13 | copolymer | 100,000 | 35 | 7 |

The melt index of each polyolefin was determined according to ASTM 1238 at 230°C and a load of 2.16 Kg. Molecular weight was determined according to standard GPC analysis with polystyrene as a standard. Each polyolefin was obtained from the following commercial sources: Stock No. 7 from Aldrich Chemical Company; Stock No. 8 from Aristech Chemical Corporation under the tradename TI4119GN; Stock No. 9 from Aristech under the tradename TI15150M; Stock No. 11 from Aristech under the tradename FP300F; Stock No. 12 from Aristech under the tradename TI4330F; and Stock No. 13 from Aristech under the tradename TI5350M.

These vulcanizable compositions of matter of Stocks 6-13 were then sheeted and molded at about 145°C for about 33 minutes. The tensile mechanical properties were measured by using the procedure described in ASTM-D 412 at 100°C. The tensile test specimens were round rings with a dimension of 0.13 cm (0.05 inches) in width and 0.19 cm (0.075 inches) in thickness. The rings were notched at two places on the inner circumference of the ring at equidistant locations. A specific gauge length of 2.5 cm (1.0 inch) was used for the tensile tests. Also, the tear strengths of the vulcanized stocks were measured by using the procedure set forth in ASTM-D 624 at 100°C. The test specimens employed were round rings nicked at two points on their inside circumference, with a dimension of 0.64 cm (0.25 inches) in width, 0.25 cm (0.10 inches) in thickness, and 44 mm and 57.5 mm in inside and outside diameters, respectively. These specimens were tested at a specific gauge length of 4.445 cm (1.750 inches). Still further, the resulting vulcanizates of Stocks 6-13 were tested for hysteresis loss as measured by tanδ data. The tanδ data was obtained by using a Rheometrics Dynamic Analyzer and the Dynamic-Temperature-Step-Test procedure was followed. The test specimens used for this sweep test were rectangular slabs with dimensions of 1.3 cm (0.5 inches) in width, 3.8 cm (1.5 inches) in length, and 0.25 cm (0.1 inches) in thickness. The following test conditions were employed: frequency 31.4 rad/sec, strain of 0.2 percent for the temperature range from -70°C to -10°C, and a strain of 2 percent for the temperature range from -10°C to 100°C. Still further, each vulcanizate was tested for wear resistance. Specifically, wear resistance was determined by using the Lambourn Test. The results of this test are reported as an abrasion index that is ratio of the weight loss of the control sample to that of the tested sample. The specimens used for the Lambourn Test are circular donuts that have an inside diameter of about 2.3 cm (0.9 inches), and outside diameter of about 4.8 cm (1.9 inches), and are about 0.495 cm (0.195 inches) thick. According to the Lambourn Test, the specimens are placed on an axle and run at a slip ratio of 65 percent against a driven abrasive surface. Table IV-B shows the results.

**TABLE IV-B**

| Stock | 6 | 7 | 8 | 9 | 10 | 11 | 12 | 13 |
|---|---|---|---|---|---|---|---|---|
| Properties * | | | | | | | | |
| Tensile Strength at Break @(100°C)(psi) | 2921 | 2390 | 2842 | 2760 | 3096 | 2706 | 2916 | 2826 |
| Tensile Toughness @ 100°C | 8030 | 6770 | 8393 | 8220 | 8092 | 7344 | 8482 | 8099 |
| Maximum Elongation @ 100°C (%) | 682 | 550 | 618 | 605 | 658 | 544 | 635 | 609 |

| Properties * | | | | | | | | |
|---|---|---|---|---|---|---|---|---|
| 50% Modulus @ 100°C (psi) | 124 | 242 | 217 | 232 | 135 | 251 | 206 | 213 |
| 300% Modulus @ 100°C (psi) | 841 | 1345 | 1295 | 1338 | 904 | 1462 | 1187 | 1260 |
| Tear Strength @ 100°C (lb./in.) | 502 | 630 | 640 | 655 | 554 | 595 | 622 | 614 |
| Travel at Tear (%) | 602 | 501 | 602 | 542 | 642 | 476 | 622 | 557 |
| Abrasion Index | 100 | 97 | 105 | 105 | 100 | 91 | 98 | 98 |
| tanδ @ 100°C | .1315 | .1713 | .17 | .1663 | .1409 | .1654 | .1684 | .1649 |
| Thermal Index 1000 | 1.06 | 0.71 | 0.78 | 0.72 | 1.04 | 0.66 | 0.82 | 0.81 |

| | | | | | | | | |
|---|---|---|---|---|---|---|---|---|
| * To convert from psi to kPa, multiply by 6.896. To convert from lb/in to kg/cm, multiply by 0.1786. | | | | | | | | |

It is clear that polypropylene homopolymer, *i.e.,* Stocks 7 and 11, degraded from about 15 to about 20 percent. On the other hand, Stocks 8 and 12, which contained propylene-ethylene copolymers, only marginally deviated from the tensile properties of the stocks that did not contain polyolefin. Likewise, Stocks 9 and 13, which also included propylene-ethylene copolymers, only deviated up to about 10 percent from those stocks that did not contain polyolefin. Also, the presence of the propylene-ethylene copolymer greatly reduces the negative impact that the presence of a polyolefin has on the elongation properties of the vulcanizates.

It is also noted that the presence of the polyolefin increases the hysteresis loss at 100°C for all of the vulcanizates that contained a polyolefin. But, this shortcoming is compensated by the increased modulus observed when the polyolefin is present. This can be more clearly understood with reference to the thermal index 1000, which is the ratio of the tanδ at 100°C to the 50 percent modulus at 100°C. As those skilled in the art will appreciate, this measurement is used as a measure of the possible heat generation under cyclic loading. A lower thermal index is indicative of a lower possible heat generation under dynamic loading. As for the abrasion index reported for the Lambourn Test, it is noted that samples with a higher abrasion indice have better wear resistance properties. As the vulcanizate becomes stiffer, less deformation occurs under cyclic loading.

Each of the stocks were then thermally aged at 100°C for 24 hours. The stocks were then tested for tensile mechanical properties according to ASTM-D 412 at 100□C as described above. The vulcanized stocks were also subsequently tested for wear resistance according to the Lambourn Test, as also discussed above. Table IV-C sets forth the data obtained from this testing.

**TABLE IV-C**

| Stock | 6 | 7 | 8 | 9 | 10 | 11 | 12 | 13 |
|---|---|---|---|---|---|---|---|---|
| Properties * | | | | | | | | |
| Tensile Strength at Break @(100°C)(psi) | 2662 | 2109 | 2454 | 2206 | 2667 | 2018 | 2161 | 2148 |
| Tensile Toughness @ 100°C | 6894 | 5124 | 6427 | 5546 | 6820 | 4366 | 5685 | 5671 |
| Maximum Elongation @ 100°C (%) | 600 | 447 | 512 | 476 | 594 | 407 | 530 | 519 |
| 50% Modulus @ 100°C (psi) | 137 | 300 | 256 | 279 | 144 | 279 | 212 | 203 |
| 300% Modulus @ 100°C (psi) | 1049 | 1519 | 1480 | 1477 | 1069 | 1554 | 1215 | 1279 |
| Abrasion Index | 100 | 93 | 101 | 97 | 100 | 95 | 99 | 102 |

| | | | | | | | | |
|---|---|---|---|---|---|---|---|---|
| * To convert from psi to kPa, multiply by 6.896. | | | | | | | | |

It is noted that the tensile properties of those stocks that contained the polypropylene homopolymer degraded up to about 35 percent after thermal aging. As with the data obtained before thermal aging, the presence of the propylene-ethylene copolymer did not deleteriously impact the tensile properties of the vulcanizate to the same magnitude that the homopolymer did. Indeed, the tensile properties of the aged vulcanizates containing propylene-ethylene copolymers only degraded from about 10 up to about 20 percent compared to the 35 percent degradation where the polypropylene homopolymer was employed.

## Claims

1. A tire comprising a component comprising
a) a vulcanised elastomer; and
b) a tear strength additive prepared by contacting from 5 to 50 parts by weight polypropylene homopolymer and from 0.05 to 2.0 parts by weight of an anhydride compatibilizing agent per one hundred parts by weight of elastomer.

2. A vulcanisable composition of matter comprising
a) an elastomer; and
b) a tear strength additive prepared by contacting from 5 to 50 parts by weight polypropylene homopolymer and from 0.05 to 2.0 parts by weight of an anhydride compatibilizing agent per one hundred parts by weight of elastomer.

3. A vulcanizate prepared by vulcanising the vulcanisable composition of matter of claim 2 with at least one vulcanising agent.

4. A tire of the vulcanizate of claim 3.

5. The tire of claims 1 or 4, the composition of matter of claim 2, or the vulcanizate of claim 3, wherein said compatibilizing agent comprises at least one of maleic anhydride, succinic anhydride, phthalic anhydride, cyclohexane dicarboxylic anhydride, itaconic anhydride, and citraconic anhydride.

6. The tire of claims 1 or 2, where said elastomer is at least one of natural rubber, polyisoprene, styrene/butadiene rubber, polybutadiene, and butyl rubber.

7. The tire of claims 1 or 4 further comprising up to 100 parts by weight of a reinforcing filler per 100 parts by weight of said elastomer.

8. The tire of claim 7 wherein said reinforcing filler comprises silica.

## Patentansprüche

1. Reifen, umfassend eine Komponente, umfassend
a) ein vulkanisiertes Elastomer; und
b) ein Reißfestigkeitsadditiv, hergestellt durch In-Kontakt-Bringen von 5 bis 50 Gewichtsteilen Polypropylenhomopolymer pro 100 Gewichtsteile Elastomer und 0,05 bis 2,0 Gewichtsteilen eines Anhydrid-Kompatibilisierungsmittels pro 100 Gewichtsteile Elastomer.

2. Vulkanisierbare Zusammensetzung, umfassend
a) ein Elastomer; und
b) ein Reißfestigkeitsadditiv, hergestellt durch In-Kontakt-Bringen von 5 bis 50 Gewichtsteilen Polypropylenhomopolymer pro 100 Gewichtsteile Elastomer und 0,05 bis 2,0 Gewichtsteilen eines Anhydrid-Kompatibilisierungsmittels pro 100 Gewichtsteile Elastomer.

3. Vulkanisat, hergestellt durch Vulkanisieren der vulkanisierbaren Zusammensetzung nach Anspruch 2 mit wenigstens einem Vulkanisierungsmittel.

4. Reifen aus dem Vulkanisat nach Anspruch 3.

5. Reifen nach Anspruch 1 oder 4, Zusammensetzung nach Anspruch 2, oder Vulkanisat nach Anspruch 3, wobei das Kompatibilisierungsmittel wenigstens eines aus Maleinsäureanhydrid, Bernsteinsäureanhydrid, Phthalsäureanhydrid, Cyclohexandicarbonsäureanhydrid, Itaconsäureanhydrid und Citraconsäureanhydrid umfasst.

6. Reifen nach Anspruch 1 oder 2, wobei das Elastomer wenigstens eines aus natürlichem Kautschuk, Polyisopren, Styrol/Butadienkautschuk, Polybutadien und Butylkautschuk ist.

7. Reifen nach Anspruch 1 oder 4, ferner umfassend bis zu 100 Gewichtsteile eines verstärkenden Füllstoffs pro 100 Gewichtsteile des Elastomers.

8. Reifen nach Anspruch 7, wobei der verstärkende Füllstoff Siliciumdioxid umfasst.

## Revendications

1. Bandage pneumatique comprenant un composant qui comprend :
a) un élastomère vulcanisé ; et
b) un additif de résistance au déchirement préparé en mettant en contact 5 à 50 parties en poids d'un homopolymère de polypropylène, pour cent parties en poids d'élastomère, et 0,05 à 2,0 parties en poids d'un agent de compatibilité du type anhydride, pour cent parties en poids d'élastomère

2. Composition vulcanisable comprenant :
a) un élastomère ; et
b) un additif de résistance au déchirement préparé en mettant en contact 5 à 50 parties en poids d'un homopolymère de polypropylène, pour cent parties en poids d'élastomère, et 0,05 à 2,0 parties en poids d'un agent de compatibilité du type anhydride, pour cent parties en poids d'élastomère

3. Vulcanisat préparé en vulcanisant la composition vulcanisable de la revendication 2 avec au moins un agent vulcanisant.

4. Bandage pneumatique constitué du vulcanisat de la revendication 3.

5. Bandage pneumatique suivant la revendication 1 ou 4, la composition de la revendication 2 ou le vulcanisat de la revendication 3, dans lequel ledit agent de compatibilité comprend au moins un des agents consistant en l'anhydride maléique, l'anhydride succinique, l'anhydride phtalique, l'anhydride cyclohexane dicarboxylique, l'anhydride itaconique et l'anhydride citraconique.

6. Bandage pneumatique suivant la revendication 1 ou 2, dans lequel ledit élastomère est au moins un des élastomères consistant en le caoutchouc naturel, le polyisoprène, le caoutchouc styrène-butadiène, le polybutadiène et le caoutchouc butyle.

7. Bandage pneumatique suivant la revendication 1 ou 4, comprenant en outre jusqu'à 100 parties en poids d'une charge de renforcement pour 100 parties en poids dudit élastomère.

8. Bandage pneumatique suivant la revendication 7, dans lequel ladite charge de renforcement comprend la silice.
